# EUROPEAN PATENT APPLICATION

(11) **EP 4 576 138 A1**
(43) Date of publication of application: **25.06.2025**
(21) Application number: 24219053.6
(22) Date of filing: 11.12.2024
(51) Int. Cl.: H01G 4/232, H01G 4/30, H01G 4/12

(54) **MULTILAYER ELECTRONIC COMPONENT**

(30) Priority: 18.12.2023 KR 20230183996
(71) Applicant: Samsung Electro-Mechanics Co., Ltd., Suwon-si, Gyeonggi-do (KR)
(72) Inventor: Choi, Eun Kyung, Suwon-si, Gyeonggi-do (KR); Choi, Hyung Jong, Suwon-si, Gyeonggi-do (KR); Lee, Chung Eun, Suwon-si, Gyeonggi-do (KR)
(74) Representative: Grünecker Patent- und Rechtsanwälte PartG mbB

(57) **Abstract**

A multilayer electronic component (100') comprising external electrode(130', 140'), including an electrode layer (131',141') and a plating porting that includes plating layers (132',133',134', 142',143',144'), said multilayer electronic component (100') may have moisture resistance reliability by disposing a sealing portion (161,162) between the plating portion and a body (110) and controlling a component or shape of the sealing portion.

## Description

### CROSS-REFERENCE TO RELATED APPLICATION(S)

This application claims the benefit of priority to Korean Patent Application No. 10-2023-0183996 filed on December 18, 2023 in the Korean Intellectual Property Office, the disclosure of which is incorporated herein by reference in its entirety.

### TECHNICAL FIELD

The present disclosure relates to a multilayer electronic component.

### BACKGROUND

Multilayer ceramic capacitors (MLCCs), multilayer electronic components, are chip-type condensers mounted on the printed circuit boards of various electronic products including display devices, such as liquid crystal displays (LCDs) and plasma display panels (PDPs), computers, smartphones, cell phones, and the like, to charge or discharge electricity.

Multilayer ceramic capacitors may be used as components in various electronic devices due to the small size, high capacity, and ease of mounting thereof. As various electronic devices, such as computers and mobile devices, have become smaller and have been implemented with higher output, demand for miniaturization and high capacity for multilayer ceramic capacitors has increased.

As the miniaturization, high capacity, and high integration of multilayer ceramic capacitors have accelerated, demand to prevent degradation of moisture resistance reliability has increased. In particular, when external electrodes include a plating layer, bonding force between the plating layer and a body may be weak due to differences in components, so a portion between the plating layer and the body may be a main path for external moisture to penetrate. In particular, when a basic electrode layer of the external electrode is a sintered electrode layer, the basic electrode layer may be oxidized by moisture penetrating into a portion between the plating layer and the body, which may worsen the problem of deterioration in moisture resistance reliability of the multilayer electronic component.

Therefore, there is a need for structural improvement that may effectively block a moisture penetration path between the plating layer of the external electrode and the body.

### SUMMARY

An aspect of the present disclosure is intended to alleviate the problem of deterioration in moisture resistance reliability of a multilayer electronic component due to moisture penetrating between a plating layer and a body.

However, the object of the present disclosure is not limited to the above-described contents and may be more easily understood in the process of describing specific exemplary embodiments of the present disclosure.

According to an aspect of the present disclosure, a multilayer electronic component includes: a body including a dielectric layer and internal electrodes alternately disposed with the dielectric layer; an external electrode including an electrode layer disposed on the body and connected to the internal electrodes and a plating portion disposed on the electrode layer and including two or more plating layers; and a sealing portion disposed between the plating portion and the body, including Sn, and in direct contact with the body.

According to another aspect of the present disclosure, a multilayer electronic component includes: a body including a dielectric layer and internal electrodes alternately disposed with the dielectric layer; an external electrode including an electrode layer disposed on the body and connected to the internal electrodes and a plating portion disposed on the electrode layer and including two or more plating layers; and a sealing portion disposed between an end portion of the electrode layer and an end portion of the plating portion and having a recess portion concave toward the electrode layer.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a schematic perspective view of a multilayer electronic component according to an exemplary embodiment in the present disclosure;
FIG. 2 is a schematic cross-sectional view taken along line I-I' of FIG. 1;
FIG. 3 is an enlarged view schematically illustrating region A of FIG. 2;
FIG. 4 is a schematic enlarged view corresponding to region A of FIG. 2 in the multilayer electronic component according to an exemplary embodiment;
FIG. 5 is a schematic enlarged view corresponding to region A of FIG. 2 in the multilayer electronic component according to an exemplary embodiment;
FIG. 6 schematically illustrates a method of forming a sealing portion according to an exemplary embodiment;
FIG. 7 is a cross-sectional view taken along line II-II' of FIG. 1;
FIG. 8 is a schematic perspective view of a multilayer electronic component according to another exemplary embodiment in the present disclosure;
FIG. 9 is a schematic cross-sectional view taken along line III-III' of FIG. 1;
FIG. 10 is a schematic enlarged view of region A' of FIG. 9;
FIG. 11 is a schematic enlarged view corresponding to region A of FIG. 9 in the multilayer electronic component according to an exemplary embodiment; and
FIG. 12 schematically illustrates a method of forming a sealing portion according to an exemplary embodiment.

### DETAILED DESCRIPTION

Hereinafter, exemplary embodiments of the present inventive concept will be described in detail with reference to the accompanying drawings. The inventive concept may, however, be exemplified in many different forms and should not be construed as being limited to the specific exemplary embodiments set forth herein. Rather, these exemplary embodiments are provided so that this disclosure will be thorough and complete, and will fully convey the scope of the inventive concept to those skilled in the art. In the drawings, the shapes and dimensions of elements may be exaggerated for clarity, and the same reference numerals will be used throughout to designate the same or like elements.

To clarify the present disclosure, portions irrespective of description are omitted and like numbers refer to like elements throughout the specification, and in the drawings, the thickness of layers, films, panels, regions, etc., are exaggerated for clarity. Also, in the drawings, like reference numerals refer to like elements although they are illustrated in different drawings. Throughout the specification, unless explicitly described to the contrary, the word "comprise" and variations, such as "comprises" or "comprising," will be understood to imply the inclusion of stated elements but not the exclusion of any other elements.

In the drawings, a first direction may be defined as a stacking direction or thickness (T) direction, a second direction may be defined as a length (L) direction, and a third direction may be defined as a width (W) direction.

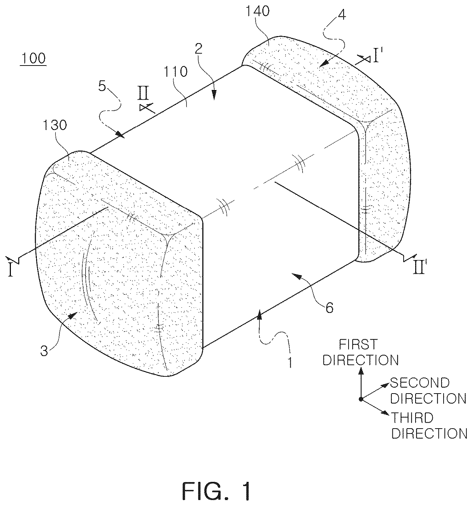

FIG. 1 is a schematic perspective view of a multilayer electronic component according to an exemplary embodiment in the present disclosure.

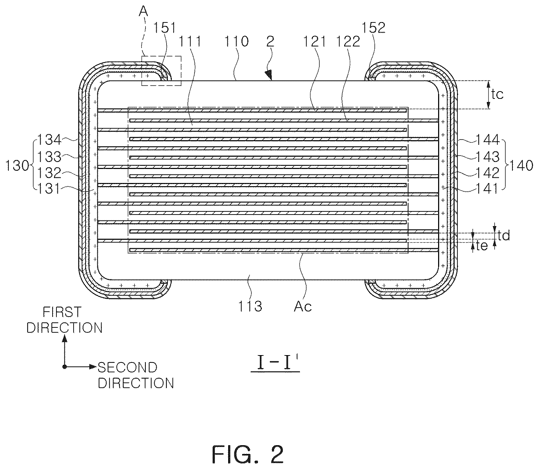

FIG. 2 is a schematic cross-sectional view taken along line I-I' of FIG. 1.

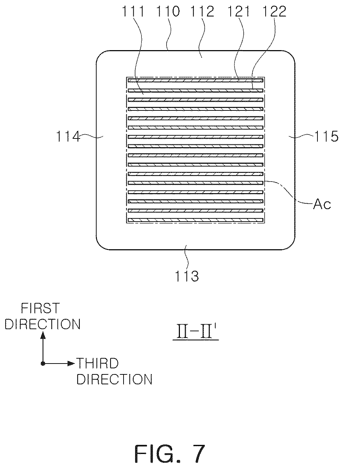

FIG. 7 is a cross-sectional view taken along line II-II' of FIG. 1.

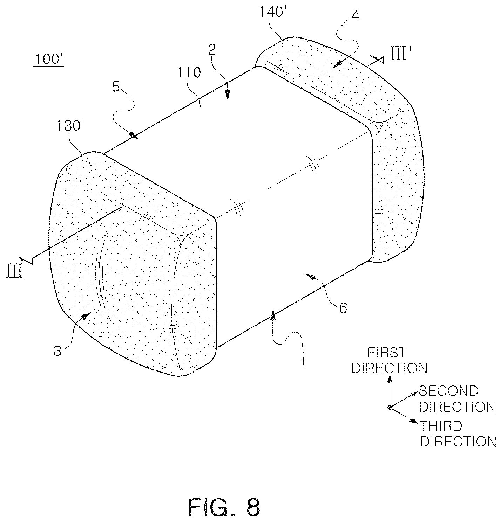

FIG. 8 is a schematic perspective view of a multilayer electronic component according to another exemplary embodiment in the present disclosure.

Hereinafter, components commonly included in a multilayer electronic component 100 according to an exemplary embodiment in the present disclosure and a multilayer electronic component 100' according to another exemplary embodiment in the present disclosure will be described in detail with reference to FIGS. 1, 2, 7, and 8. A multilayer ceramic capacitor (hereinafter referred to as 'MLCC') is described as an example of a multilayer electronic component, but the present disclosure is not limited thereto.

Hereinafter, each component included in the multilayer electronic component 100 according to an exemplary embodiment in the present disclosure will be described.

In a body 110, a dielectric layer 111 and internal electrodes 121 and 122 may be alternately disposed.

The dielectric layer 111 and the internal electrodes 121 and 122 may be alternately stacked, and in this specification, a direction in which the dielectric layer 111 and the internal electrodes 121 and 122 are stacked may be defined as the first direction.

There is no particular limitation on the specific shape of the body 110, but as shown, the body 110 may have a hexahedral shape or a similar shape. Due to shrinkage of the ceramic powder included in the body 110 during a sintering process, the body 110 may not have a hexahedral shape with perfectly straight lines, but may have a substantially hexahedral shape.

The body 110 may include first and second surfaces 1 and 2 facing each other in the first direction, third and fourth surfaces 3 and 4 connected to the first and second surfaces 1 and 2 and facing each other in the second direction, and fifth and sixth surfaces 5 and 6 connected to the first and second surfaces 1 and 2 and connected to the third and fourth surfaces 3 and 4, and facing each other in the third direction.

Meanwhile, as a margin region in which the internal electrodes 121 and 122 are not disposed overlaps on the dielectric layer 111, a step due to a thickness of the internal electrodes 121 and 122 occurs, so that a corner connecting the first surface and the third to fifth surfaces and/or a corner connecting the second surface and the third to fifth surfaces may shrink toward the center of the body 110 in the first direction based on the first surface or the second surface. Alternatively, due to shrinkage behavior during the sintering process of the body, a corner connecting the first surface 1 to the third to sixth surfaces 3, 4, 5, and 6 and/or a corner connecting the second surface 2 to the third to sixth surfaces 3, 4, 5, and 6 may be shrunken toward the center of the body 110 in the first direction based on the first surface or the second surface. Alternatively, in order to prevent a chipping defect, the corners connecting each surface of the body 110 may be rounded by performing a separate process, so that the corners connecting the first surface to the third to sixth surfaces and/or the corners connecting the second surface to the third to sixth surfaces may be rounded.

The plurality of dielectric layers 111 forming the body 110 are in a fired state, and boundaries between adjacent dielectric layers 111 may be integrated to the extent that it is difficult to check the boundary without using a scanning electron microscope (SEM). The number of stacked dielectric layers is not particularly limited and may be determined considering the size of the multilayer electronic component. For example, the body may be formed by stacking 400 or more dielectric layers.

The dielectric layer 111 may be formed by preparing a ceramic slurry including ceramic powder, an organic solvent, and a binder, applying and drying the slurry on a carrier film to prepare a ceramic green sheet, and then sintering the ceramic green sheet. The ceramic powder is not particularly limited as long as sufficient capacitance may be obtained, but for example, barium titanate (BaTiO₃)-based powder may be used as the ceramic powder. For a more specific example, barium titanate (BaTiO₃)-based powder may be one or more of BaTiO₃, (Ba₁₋ₓCaₓ)TiO₃ (0<x<1), Ba(T_{1-y}Ca_{y})O3 (0<y<1), (Ba₁₋ₓCaₓ)(Ti_{1-y}Zr_{y})O₃ (0<x<l, 0<y<1), and Ba(Ti_{1-y}Zr_{y})O₃ (0<y<1), and paraelectric powder based on CaZrO₃ may be (Ca₁₋ₓSrₓ)(Zr_{1-y}Ti_{y})O₃ (0<x<1, 0<y<1).

Therefore, the dielectric layer 111 may include one or more of BaTiO₃, (Ba₁₋ₓCaₓ)TiO₃ (0<x<1), Ba(Ti_{1-y}Ca_{y})O3 (0<y<1), (Ba₁₋ₓCaₓ)(Ti_{1-y}Zr_{y})O₃ (0<x<1, 0<y<1), and Ba(Ti_{1-y}Zr_{y})O₃ (0<y<1).

An average thickness td of the dielectric layer 111 is not particularly limited.

For the purpose of miniaturization and high capacitance of the multilayer electronic component 100, the average thickness td of the dielectric layer 111 may be 0.35 um or less, and to improve the reliability of the multilayer electronic component 100 under high temperature and high pressure, the average thickness of the dielectric layer 111 may be 3 um or more.

The average thickness td of the dielectric layer 111 may be measured by scanning an image of a cross-section (L-T cross-section) of the body 110 in the third and first directions with a scanning electron microscope (SEM).

For example, as for the average thickness td of the dielectric layer 111, with respect to a total of five dielectric layers including two upper layers and two lower layers based on one dielectric layer at a point at which a central line of the body in the length direction and a central line of the body in the thickness direction meet among dielectric layers extracted from an image obtained by scanning a cross-section in the length and thickness directions (L-T) cut at a central portion of the body 110 in the width direction with a scanning electron microscope (SEM), five points including two left points and two right points centered on one reference point at equal intervals are determined based on a point at which the central line of the body in the length direction and the central line of the body in the thickness direction meet, and then thickness at each point may be measured to measure an average value.

The body 110 may include a capacitance formation portion Ac disposed inside the body 110 and forming capacitance by including the first internal electrode 121 and the second internal electrode 122 alternately disposed with the dielectric layer 111 and cover portions 112 and 113 formed above and below the capacitance formation portion Ac in the first direction.

The capacitance formation portion Ac is a portion contributing to formation of capacitance of the capacitor and may be formed by repeatedly stacking a plurality of first and second internal electrodes 121 and 122 with the dielectric layer 111 interposed therebetween and may refer to a region in which the first and second internal electrodes 121 and 122 overlap in the first direction. In addition, the first internal electrode 121 may be disposed at the top of the capacitance formation portion Ac in the first direction, and the second internal electrode 122 may be disposed at the bottom of the capacitance formation portion Ac in the first direction.

The internal electrodes 121 and 122 may include first and second internal electrodes 121 and 122. The first and second internal electrodes 121 and 122 may be alternately disposed to face each other with the dielectric layer 111 constituting the body 110 interposed therebetween and may be respectively exposed to the third and fourth surfaces 3 and 4 of the body 110.

The first internal electrode 121 may be spaced apart from the fourth surface 4 and may be exposed to the third surface 3, and the second internal electrode 122 may be spaced apart from the third surface 3 and may be exposed to the fourth surface 4. A first external electrode 130 may be disposed on the third surface 3 of the body and connected to the first internal electrode 121, and a second external electrode 140 may be disposed on the fourth surface 4 of the body and connected to the second internal electrode 122.

That is, the first internal electrode 121 is not connected to the second external electrode 140 but connected to the first external electrode 130, and the second internal electrode 122 is not connected to the first external electrode 130 but connected to the second external electrode 140. Accordingly, the first internal electrode 121 may be formed to be spaced apart from the fourth surface 4 by a predetermined distance, and the second internal electrode 122 may be formed to be spaced apart from the third surface 3 by a predetermined distance. In addition, the first and second internal electrodes 121 and 122 may be disposed to be spaced apart from the fifth and sixth surfaces of the body 110.

The conductive metal included in the internal electrodes 121 and 122 may be one or more of Ni, Cu, Pd, Ag, Au, Pt, In, Sn, Al, Ti, and alloys thereof, but the present disclosure is not limited thereto.

An average thickness te of the internal electrodes 121 and 122 is not particularly limited and may vary depending on the purpose thereof. For example, in order to miniaturize the multilayer electronic component 100, the average thickness te of the internal electrodes 121 and 122 may be 0.35 um or less, and in order to improve the reliability of the multilayer electronic component 100 under high temperature and high pressure, the average thickness te of the internal electrodes 121 and 122 may be 3 um or more.

As for the average thickness te of the internal electrodes 121 and 122, with respect to a total of five internal electrode layers including two upper layers and two lower layers based on one internal electrode layer at a point at which a central line of the body in the length direction and a central line of the body in the thickness direction meet among internal electrode layers extracted from an image obtained by scanning a cross-section in the length and thickness directions (L-T) cut in a central portion of the body 110 in the width direction with a scanning electron microscope (SEM), five points including two left points and two right points centered on one reference point at equal intervals are determined based on a point at which the central line of the body in the length direction and the central line of the body in the thickness direction meet, and then thickness at each point may be measured to measure an average value.

The cover portions 112 and 113 may be disposed on upper and lower surfaces of the capacitance formation portion Ac in the first direction.

The cover portions 112 and 113 may basically serve to prevent damage to the internal electrodes due to physical or chemical stress.

The cover portions 112 and 113 may include the same material as the dielectric layer 111. That is, the cover portions 112 and 113 may include a ceramic material, for example, a barium titanate (BaTiO₃)-based ceramic material.

Meanwhile, a thickness of the cover portions 112 and 113 may not be particularly limited. For example, a thickness tc of the cover portions 112 and 113 may each be 20 um or less.

The average thickness tc of the cover portions 112 and 113 may refer to a size in the first direction and may be a value obtained by averaging the sizes of the cover portions 112 and 113 measured at five points at equal intervals above or below the capacitance formation portion Ac.

In addition, margin portions 114 and 115 may be disposed on a side surface of the capacity formation portion Ac.

The margin portions 114 and 115 may include a first margin portion 114 disposed on the fifth surface 5 of the body 110 and a second margin portion 115 disposed on the sixth surface 6. That is, the margin portions 114 and 115 may be disposed on both end surfaces of the ceramic body 110 in the width direction.

As shown in FIG. 7, the margin portions 114 and 115 may refer to a region between both ends of the first and second internal electrodes 121 and 122 in a cross-section of the body 110 cut in the width-thickness (W-T) direction and a boundary surface of the body 110.

The margin portions 114 and 115 may basically serve to prevent damage to the internal electrodes due to physical or chemical stress.

The margin portions 114 and 115 may be formed by forming internal electrodes by applying conductive paste on a ceramic green sheet except for regions in which the margin portions are to be formed.

Meanwhile, a width of the margin portions 114 and 115 may not be particularly limited. For example, an average width of the margin portions 114 and 115 may each be 20 um or less.

The average width of the margin portions 114 and 115 may refer to an average size in the third direction of a region in which the internal electrode is spaced apart from the fifth surface and an average size in the third direction of a region in which the internal electrode is spaced apart from the sixth surface, and may be an average value of sizes of the margin portions 114 and 115 in the third direction measured at five points at equal intervals on the side surface of the capacitance formation portion Ac.

The external electrodes 130 and 140 may be disposed on the body 110, and specifically, may be disposed on the third and fourth surfaces 3 and 4 of the body 110.

The external electrodes 130 and 140 may include first and second external electrodes 130 and 140 disposed on the third and fourth surfaces 3 and 4 of the body 110 and connected to the first and second internal electrodes 121 and 122, respectively.

Meanwhile, there is no need to limit the external electrodes 130 and 140 to being disposed only on the third and fourth surfaces 3 and 4 of the body. Referring to FIGS. 1 and 2, the first external electrode 130 may extend from the third surface 3 of the body 110 to be disposed on portions of the first, second, fifth, and sixth surfaces 1, 2, 5, and 6, and the second external electrode 140 may extend from the fourth surface 4 to be disposed on portions of the first, second, fifth, and sixth surfaces 1, 2, 5, and 6.

In the present exemplary embodiment, a structure in which the multilayer electronic component 100 has two external electrodes 130 and 140 is described, but the number and shape of the external electrodes 130 and 140 may change depending on the shape of the internal electrodes 121 and 122 or other purposes.

The external electrodes 130, 140, 130', and 140' may include electrode layers 131, 141, 131', and 141' disposed on the body 110 and connected to the internal electrodes 121 and 122.

Specifically, the first internal electrodes 130' and 140' may include first electrode layers 131' and 131' disposed on the body 110 and connected to the first internal electrode 121, and second electrode layers 141 and 141' disposed on the body 110 and connected to the second internal electrode 122.

The first and second electrode layers 131, 141, 131', and 141' may be connected to the internal electrodes 121 and 122, respectively, and may serve to ensure electrical connectivity between the external electrodes 130 and 140 and the internal electrodes 121 and 122.

The first electrode layers 131 and 131' and the second electrode layers 141 and 141' may include a conductive metal. As the conductive metal, any material having excellent electrical conductivity may be used and is not particularly limited. For example, the conductive metal may be one or more of nickel (Ni), copper (Cu), and alloys thereof.

Meanwhile, when the internal electrodes 121 and 122 include Ni and the first and second electrode layers 131, 141, 131', and 141' include Cu, Ni-Cu alloy may be formed between the internal electrodes 121 and 122 and the first and second electrode layers 131, 141, 131', and 141', thereby improving electrical connectivity between the internal electrodes 121 and 122 and the external electrodes 130, 140, 130' and 140'.

In an exemplary embodiment, as a more specific example of the first and second electrode layers 131, 141, 131', and 141', the electrode layer may be a sintered electrode including a conductive metal and glass or may be a resin-based electrode including a conductive metal and a resin.

In addition, the first and second electrode layers 131, 141, 131', and 141' may be formed by sequentially forming a sintered electrode and a resin-based electrode on the body. In addition, the electrode layer may be formed by transferring a sheet including a conductive metal onto the body or may be formed by transferring a sheet including a conductive metal onto the sintered electrode.

There is no need to specifically limit the size of the multilayer electronic components 100 and 100'. For example, the length of the multilayer electronic component 100 may be 0.85 mm or more and 1.15 mm or less, the thickness of the multilayer electronic component 100 may be 0.35 mm or more and 0.65 mm or less, and the width of the multilayer electronic component 100 may be 0.35 mm or more and less than 0.65mm.

Here, the length of the multilayer electronic component 100 may refer to the maximum size of the multilayer electronic component 100 in the second direction, the thickness of the multilayer electronic component 100 may refer to the maximum size of the multilayer electronic component 100 in the first direction, and, the width of the multilayer electronic component 100 may refer to the maximum size of the multilayer electronic component 100 in the third direction.

FIG. 2 is a schematic cross-sectional view taken along line I-I' of FIG. 1.

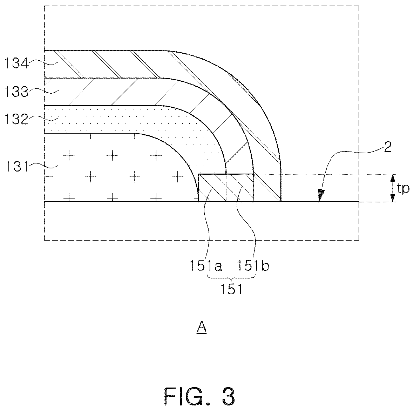

FIG. 3 is an enlarged view schematically illustrating region A of FIG. 2.

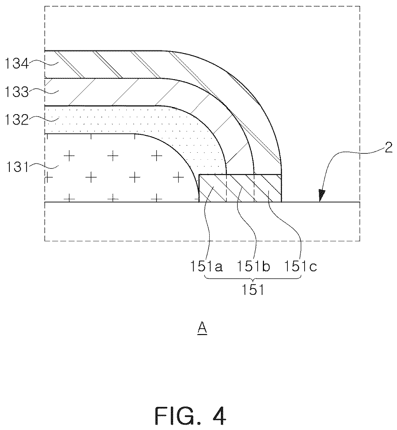

FIG. 4 is a schematic enlarged view corresponding to region A of FIG. 2 in a multilayer electronic component according to an exemplary embodiment.

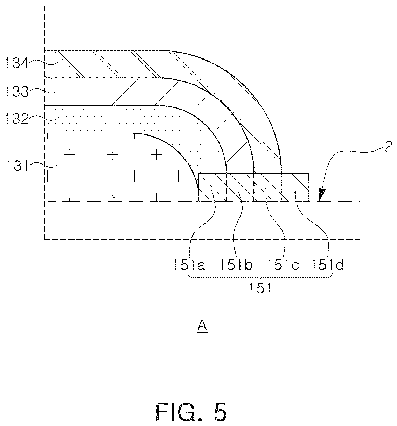

FIG. 5 is a schematic enlarged view corresponding to region A of FIG. 2 in a multilayer electronic component according to an exemplary embodiment.

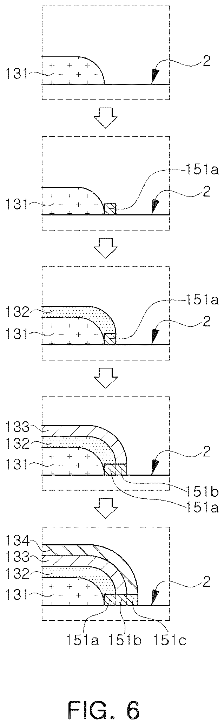

FIG. 6 schematically illustrates a method of forming a sealing portion according to an exemplary embodiment.

Hereinafter, the components of the multilayer electronic component 100 according to an exemplary embodiment in the present disclosure will be described in detail with reference to FIGS. 2 to 6.

The external electrodes 130 and 140 of the multilayer electronic component 100 according to an exemplary embodiment in the present disclosure may include a plating portion disposed on the electrode layers 131 and 141 and including two or more plating layers 132, 133, 134, 142, 143, and 144. The type of each of the two or more plating layers is not particularly limited, and each of the two or more plating layers may be a plating layer including one or more of nickel (Ni), tin (Sn), palladium (Pd), and alloys thereof.

Specifically, the plating portion may include a first plating portion including two or more plating layers 132, 133, and 134 disposed on the first electrode layer 131 and a second plating portion including two or more plating layers 142, 143, and 144 disposed on the second electrode layer.

In the drawing of the present disclosure, two or more plating layers are illustrated including three layers, but the plating portion of the present disclosure is not limited to including three plating layers.

In an exemplary embodiment, the plating portion may include Cu plating layers 132 and 142 disposed on the electrode layers 131 and 141, Ni plating layers 133 and 143 disposed on the Cu plating layer, and Sn plating layers 134 and 144 disposed on the Ni plating layer.

The Cu plating layers 132 and 142 may serve to relieve stress between the plating portion and the electrode layers 131 and 141, the Ni plating layers 133 and 143 may serve to improve the sealing and mechanical strength of the external electrodes 130 and 140, and the Sn plating layers 134 and 144 may serve to improve the mountability of the multilayer electronic component 100.

Therefore, according to an exemplary embodiment, when the plating portion includes the Cu plating layers 132 and 142 disposed on the electrode layers 131 and 141, the Ni plating layers 133 and 143 disposed on the Cu plating layer, and the Sn plating layers 134 and 144 disposed on the Ni plating layer, the mechanical strength, moisture resistance reliability, and mountability of the multilayer electronic component 100 may be improved.

Referring to FIGS. 2 and 3, the multilayer electronic component 100 according to an exemplary embodiment in the present disclosure may include sealing portions 151 and 152 disposed between the plating layers 132, 133, and 134 and the body 110, including Sn, and directly contacting the body 110.

The adhesion between the plating layers 132, 133, and 134 and the body 110 may be weak due to a difference in the components thereof, and as a result, a gap may occur between ends of the plating layers and the body 110. The gap may become a main penetration path for external moisture or plating solution and may deteriorate moisture resistance reliability of the multilayer electronic component 100.

Accordingly, since the multilayer electronic component 100 according to an exemplary embodiment in the present disclosure includes the sealing portions 151 and 152 including Sn and directly contacting the body 110 between the plating layers 132, 133, 134, 142, 143, and 144 and the body 110, the gap between the ends of the plating layers 132, 133, 134, 142, 143, and 144 and the body 110 may be blocked, thereby improving the moisture resistance reliability of the multilayer electronic component 100. In particular, since the plating portion of the multilayer electronic component 100 according to an exemplary embodiment in the present disclosure includes two or more plating layers and the sealing portions 151 and 152 including Sn are disposed between the plating layers 132, 133, 134, 142, 143, and 144 and the body, the moisture resistance reliability of the multilayer electronic component 100 may be further improved.

Referring to FIG. 3, the ends of the electrode layers 131 and 141 may be in contact with the surface of the body 110, and when the electrode layers 131 and 141 extend to be disposed on at least one of the first, second, fifth, and sixth surfaces 1, 2, 5, and 6 of the body 110, the ends of the electrode layers 131 and 141 may be in contact with a portion of at least one of the first, second, fifth, and sixth surfaces 1, 2, 5, and 6 of the body 110.

In an exemplary embodiment, the sealing portions 151 and 152 may contact the ends of the electrode layers 131 and 141. Accordingly, it is possible to prevent the electrode layers 131 and 141 from being damaged by infiltrated external moisture or plating solution.

Referring to FIG. 3, the sealing portion 151 may be disposed to not extend beyond the end of the plating layer 134 disposed at the outermost portion of the plating portion. At this time, the plating layer 134 disposed on the outermost portion may be in contact with one side surface of the sealing portion 151.

In an exemplary embodiment, the sealing portions 151 and 152 may be disposed to not extend beyond the end of the plating layer disposed at the outermost portion of the plating portion. Accordingly, the moisture resistance reliability of the multilayer electronic component 100 may be secured while the proportion of the external electrodes 130 and 140 in the entire components may be reduced.

In addition, referring to FIG. 3, the plating portion according to an exemplary embodiment may entirely cover the sealing portion 151. Accordingly, the adhesion strength of the external electrode may be improved.

Referring to FIG. 4, the sealing portion 151 may be disposed between the end of the electrode layer 134 of the plating portion disposed at the outermost portion from the end of the electrode layer 131 and the second surface 2 of the body 110.

That is, the sealing portions 151 and 152 according to an exemplary embodiment may be disposed between the plating layers 134 and 144 of the plating portion disposed in the outermost portion and the body 110. Accordingly, the effect of improving the adhesion strength of the external electrode may be further improved by forming the sealing portions 151 and 152 between the ends of all of the plating layers 132, 133, 134, 142, 143, and 144 and the body.

Referring to FIG. 5, the sealing portion 151 may be disposed to extend beyond the end of the plating layer 134 disposed at the outermost portion of the plating portion. In this case, the effect of blocking or extending a penetration path of external moisture may be further improved.

That is, the sealing portions 151 and 152 according to an exemplary embodiment may be disposed to extend beyond the ends of the plating layers 134 and 144 disposed at the outermost portion of the plating portion. Accordingly, the moisture resistance reliability of the multilayer electronic component 100 may be further improved.

Referring to FIGS. 4 and 5, the first sealing portion 151 may be divided into a first region 151a, a second region 151b, and a third region 151c depending on where the first sealing portion 151 is disposed in the region between the two or more plating layers 132, 133, and 134 and the second surface 2 of the body 110, and this may also be the same for the second sealing portion 152.

Specifically, the first region 151a may refer to a region of the sealing portion disposed between the first plating layer 132 and the body 110, the second region 151b may refer to a region of the sealing portion disposed between the second plating layer 133 and the body 110, and the third region 151c may refer to a region of the sealing portion disposed between the third plating layer 134 and the body 110.

FIGS. 4 and 5 illustrate a case in which the first region 151a, the second region 151b, and the third region 151c are arranged sequentially, but the present disclosure is not limited thereto, and at least two of the first region 151a, the second region 151b, and the third region 151c may be arranged to be spaced apart from each other in the second direction.

Meanwhile, referring to FIG. 3, an average thickness of the sealing portion 151 is indicated as tp. In FIG. 3, the average thickness tp is displayed based on the first sealing portion 151, but an average thickness of the second sealing portion 152 may also be displayed as tp.

There is no need to specifically limit a lower limit value of the average thickness tp of the sealing portions 151 and 152. For example, when the average thickness tp of the sealing portions 151 and 152 is 1 um or more, the moisture resistance reliability of the multilayer electronic component 100 may be sufficiently improved. Meanwhile, there is no need to specifically limit an upper limit value of the average thickness tp of the sealing portions 151 and 152. For example, the average thickness tp of the sealing portions 151 and 152 may be 8 um or less.

Meanwhile, the ends of the electrode layers 131 and 141 may refer to a boundary line between the electrode layers 131 and 141 and a surface of the body 110 on which the electrode layer is not formed, and the end of the plating layer may refer to an end surface of the plating layer facing the surface of the body.

The method of forming the sealing portions 151 and 152 is not particularly limited. For example, the sealing portions 151 and 152 may be Sn plating layers. Referring to FIG. 6, as a specific example of a method of forming the sealing portions 151 and 152, a method of forming the electrode layer 131 on the body, immersing the same in a solution in which Sn is dissolved, removing a region excluding a region in which the first region 151a is formed with an alkaline solution or an acidic solution, forming the first plating layer 132, immersing the same again in a solution in which Sn is dissolved, removing a region excluding a region in which the second region 151b is formed with an alkaline solution or an acidic solution, and then forming the second plating layer 133, the third region 151c, and the third plating layer 134 in the same manner may be provided. At this time, the formation region of the sealing portion 151 may vary depending on the thickness of each plating layer forming the plating portion or the shape of each region 151a, 151b, and 151c.

FIG. 8 is a schematic perspective view of a multilayer electronic component according to another exemplary embodiment in the present disclosure.

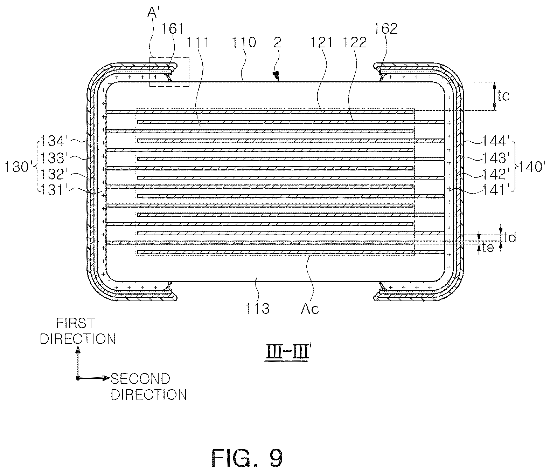

FIG. 9 is a schematic cross-sectional view taken along line III-III' of FIG. 1.

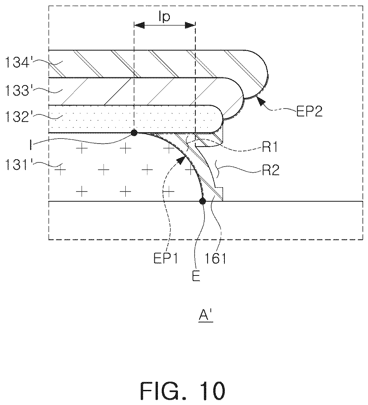

FIG. 10 is a schematic enlarged view of region A' of FIG. 9.

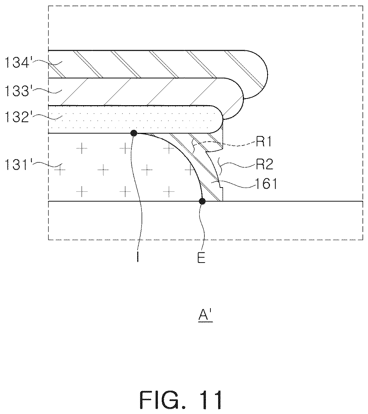

FIG. 11 is a schematic enlarged view corresponding to region A' of FIG. 9 in a multilayer electronic component according to an exemplary embodiment.

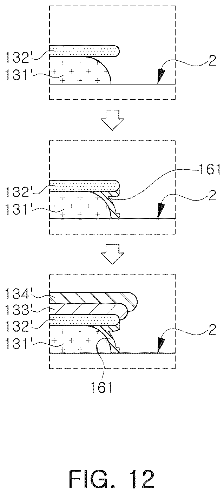

FIG. 12 schematically illustrates a method of forming a sealing portion according to an exemplary embodiment.

Hereinafter, the multilayer electronic component 100' according to another exemplary embodiment in the present disclosure will be described in detail with reference to FIGS. 8 to 12, but repeated contents with the multilayer electronic component 100 according to an exemplary embodiment in the present disclosure are omitted.

In addition, in FIGS. 10 to 12, another exemplary embodiment in the present disclosure is described based on the first external electrode 130' and the first sealing portion 161, but this may also be similarly applied to the second external electrode 140' and the second sealing portion.

The multilayer electronic component 100' according to another exemplary embodiment in the present disclosure may include the body 110 including the dielectric layer 111 and the internal electrodes 121 and 122 alternately disposed with the dielectric layer, external electrodes 130' and 140' including electrode layers 131' and 141' disposed on the body and connected to the internal electrodes and a plating portion disposed on the electrode layer and including two or more plating layers 132', 133', 134', 142', 143', 144', and sealing portions 161 and 162 disposed between an end portion EP1 of the electrode layer and an end portion EP2 of the plating portion and having a recess portion R2 concave toward the electrode layer.

The external electrodes 130' and 140' of the multilayer electronic component 100' according to another exemplary embodiment in the present disclosure may include a plating portion disposed on the electrode layers 131' and 141' and having two or more plating layers (132', 133', 134', 142', 143', and 144'. The type of each of the two or more plating layers is not particularly limited, and each of the two or more plating layers may be a plating layer including one or more of nickel (Ni), tin (Sn), palladium (Pd), and alloys thereof.

Specifically, the plating portion may include a first plating portion including the two or more plating layers 132', 133', and 134' disposed on the first electrode layer 131' and the two or more plating layers 142', 143', and 144' disposed on the second electrode layer 141'.

In the drawing of the present disclosure, two or more plating layers are illustrated as including three layers, but the plating portion of the present disclosure is not limited to including three plating layers.

In an exemplary embodiment, the plating portion may include Cu plating layers 132' and 142' disposed on the electrode layers 131' and 141', Ni plating layers 133' and 143' disposed on the Cu plating layers, and Sn plating layers 134' and 144' disposed on the Ni plating layers.

The Cu plating layers 132' and 142' may serve to relieve stress between the plating portion and the electrode layers 131' and 141', the Ni plating layers 133' and 143' may serve to improve sealing and mechanical strength of the external electrodes 130' and 140', and the Sn plating layer 134' and 144' may serve to improve the mountability of the multilayer electronic component 100'.

Therefore, according to an exemplary embodiment, when the plating portion includes the Cu plating layers 132' and 142' disposed on the electrode layers 131' and 141', the Ni plating layers 133' and 143' disposed on the Cu plating layer, and the Sn plating layers 134' and 144' disposed on the Ni plating layers, the mechanical strength, moisture resistance reliability, and mountability of the multilayer electronic component 100' may be improved.

Referring to FIGS. 9 and 10, the electrode layers 131' and 141' and the plating portion may form the end portions EP1 and EP2, respectively. Meanwhile, adhesion between the end portion EP1 of the electrode layers 131' and 141' and the end portion EP2 of the plating portions 132', 133', and 134' and the body 110 may be weak due to differences in components thereof, and since the end of the plating portion does not contact the body 110 or the electrode layers 131' and 141', the electrode layers 131' and 141' and the plating portion may form the end portions EP1 and EP2, respectively. Meanwhile, the end portion EP1 of the electrode layers 131' and 141' is vulnerable to external moisture penetration, so when the electrode layers 131' and 141' and the plating portion form the end portions EP1 and EP2, respectively, it may be difficult to secure moisture resistance reliability of the multilayer electronic component 100' . Accordingly, since the multilayer electronic component 100' according to another exemplary embodiment in the present disclosure includes the sealing portion disposed between the end portion EP1 of the electrode layers 131' and 141' and the end portion EP2 of the plating portion and having the recess portion R2 concave toward the electrode layers 131' and 141', thereby improving the moisture resistance reliability of the multilayer electronic component 100'.

Meanwhile, the sealing portions 161 and 162 of the multilayer electronic component 100' according to another exemplary embodiment in the present disclosure may have a recess portion concave toward the electrode layers 131' and 141'. The fact that the sealing portions 161 and 162 have a recess portion concave toward the electrode layers 131' and 141' may mean that the sealing portions 161 and 162 have a concave recess portion in a direction toward the electrode layers 131' and 141' in the second direction. Accordingly, the moisture resistance reliability of the multilayer electronic component 100' may be secured while minimizing the proportion of the external electrodes 130' and 140' and the sealing portions 161 and 162 in the entire components.

In an exemplary embodiment, the sealing portions 161 and 162 may be arranged not to extend beyond the ends of the plating layer disposed at the outermost portion of the plating layers 132', 133', and 134'. Accordingly, the moisture resistance reliability of the multilayer electronic component 100' may be secured while the proportion of the external electrodes 130 and 140 in the entire component may be reduced.

In an exemplary embodiment, the end portion EP1 of the electrode layers 131' and 141' may refer to a region in which the electrode layers 131' and 141' are spaced apart from the plating portion, and the end portion EP2 of the plating portion may refer to a region in which the plating portion is spaced apart from the electrode layers 131' and 141'. As described above, the end portion EP1 of the electrode layers 131' and 141' may be vulnerable to external moisture penetration. Therefore, in an exemplary embodiment, since the sealing portions 161 and 162 cover the end portion EP1 of the electrode layer, the moisture resistance reliability of the multilayer electronic component 100' may be further improved.

Referring to FIG. 10, a recess portion R1 concave in the second direction from an end E of the electrode layer 131' may be disposed between the electrode layer 131' and the plating portions 132', 133', and 134'.

When the electrode layer 131' is a sintered electrode including glass, the recess portion R1 may be formed as the plating portions 132', 133', and 134' are not formed at the end portion EP1 of the electrode layer 131' due to differences in components.

When the recess portion R1 is formed, the end portion EP1 of the electrode layer 131' may be exposed to the outside, and accordingly, there is a risk that the electrode layer 131' may be damaged by external moisture. In particular, since the recess portion R1 is formed adjacent to an interface in which the end portion EP1 of the electrode layer 131' and the end portion EP2 of the plating portion meet, when external moisture penetrates into the recess portion R1, adhesion between the electrode layer 131' and the plating portion may be reduced.

Accordingly, by arranging the sealing portions 161 and 162 of the multilayer electronic component 100' according to another exemplary embodiment in the present disclosure to fill the recess portion R1, damage to the electrode layers 131' and 141' and a decrease in the adhesion between the electrode layers 131' and 141' and the plating portion due to external moisture may be prevented.

Meanwhile, in order to further improve the moisture resistance reliability of the multilayer electronic component 100', the sealing portions 161 and 162 may be formed to have a sufficient thickness in a portion vulnerable to moisture penetration.

Referring to FIG. 10, the minimum size in the second direction from a point I at which the electrode layer 131', the plating portion, and the sealing portion 161 are all in contact to the surface of the sealing portion 161 is indicated as lp.

The point at which the electrode layer 131' and the plating portion come into contact is a point at which the electrode layer 131' and the plating portion begin to separate from each other, so it is vulnerable to external moisture penetration and may become a main path for external moisture penetration. It is desirable to form the sealing portion 161 to be sufficiently thick in the second direction as shown in FIG. 10 to prevent moisture from penetrating into the point at which the electrode layer 131' and the plating portion contact. Therefore, in an exemplary embodiment, the minimum size in the second direction from the point I at which the electrode layers 131' and 141', the plating portion, and the sealing portions 161 and 162 are in contact simultaneously to the surfaces of the sealing portions 161 and 162 may be adjusted to 10 nm or more, thereby sufficiently preventing moisture from penetrating into the contact point between the electrode layers 131' and 141' and the plating portion.

Referring to FIG. 10, the sealing portion 161 may extend from the end portion EP of the electrode layer 131' to be disposed on a portion of the second surface 2, which is the surface of the body adjacent to the end E of the electrode layer 131'. That is, the sealing portion 161 according to an exemplary embodiment may extend from the end portion EP of the electrode layers 131' and 141' to be disposed on a portion of the surface of the body adjacent to the end E of the electrode layers 131' and 141' . Accordingly, adhesion between the electrode layers 131' and 141' and the body 110 may be improved.

Referring to FIG. 10, although the recess portion R2 concave toward the electrode layer 131' of the sealing portion 161 is illustrated to extend beyond the end E of the electrode layer 131', the present disclosure is not limited thereto.

Referring to FIG. 11, the recess portion R2 concave toward the electrode layer 131' of the sealing portion 161 may be disposed to not extend beyond the end E of the electrode layer 131'. In this case, since the sealing portion 161 may cover sufficiently thickly a space between the electrode layer 131' and the plating portion, which is vulnerable to external moisture penetration, the moisture resistance reliability of the multilayer electronic component 100' may be further improved. That is, in an exemplary embodiment, the recess portion R2, which is concave toward the electrode layers 131' and 141' of the sealing portions 161 and 162, is disposed to not extend beyond the end E of the electrode layers 131' and 141', thereby further improving the moisture resistance reliability of the multilayer electronic component 100'.

In an exemplary embodiment, the second plating layers 133' and 143' and the third plating layers 134' and 144' of the plating portion may not be disposed on the sealing portions 161 and 162, respectively. After forming the electrode layers 131' and 141' and the first plating layers 132' and 142' and forming the sealing portions 161 and 162, when the second or third plating layers 133', 134', 143', and 144' are formed, the second plating layers 133' and 143' and the third plating layers 134' and 144' may not be disposed on the sealing portions 161 and 162, respectively, depending on the components of the sealing portions 161 and 162. Specifically, when the sealing portions 161 and 162 include an insulating material and the second plating layers 133' and 143' and the third plating layers 134' and 144' are electroplated, the second plating layers 133' and 143' and the third plating layer 134' and 144' may not be disposed on the sealing portions 161 and 162 due to differences in components.

In an exemplary embodiment, the sealing portions 161 and 162 may include fluorocarbon. Fluorocarbon has excellent chemical resistance and may be formed densely, so it may effectively prevent the penetration of external moisture. Meanwhile, the type of fluorocarbon is not particularly limited as long as it may form dense and uniform sealing portions 161 and 162.

For example, the sealing portions 161 and 162 are fluorocarbon and may include one or more of CF2-, CF3-, and CF- series fluorocarbons.

The sealing portions 161 and 162 including one or more of CF2-, CF3-, and CF- series fluorocarbons may be formed through an atmospheric pressure plasma coating method.

Referring to FIG. 12, the sealing portion 161 according to an exemplary embodiment may be formed through an atmospheric pressure plasma coating method after the electrode layer 131' and the first plating layer 132' are formed. Thereafter, the second plating layer 133' or the third plating layer 134' may be formed, and when the sealing portion 161 includes fluorocarbon, the second plating layer 133' or the third plating layer 134' may not be disposed on the sealing portion 161 due to insulating properties of the sealing portion 161.

One of the various effects of the present disclosure is to improve moisture resistance reliability of the multilayer electronic component by forming the sealing portion between two or more plating layers and the body and adjusting the shape of the sealing portion.

While example exemplary embodiments have been shown and described above, it will be apparent to those skilled in the art that modifications and variations could be made without departing from the scope of the present disclosure as defined by the appended claims.

## Claims

1. A multilayer electronic component comprising:
a body including a dielectric layer and internal electrodes alternately disposed with the dielectric layer;
an external electrode including an electrode layer disposed on the body and connected to the internal electrode and a plating portion disposed on the electrode layer and including two or more plating layers; and
a sealing portion disposed between an end portion of the electrode layer and an end portion of the plating portion and having a recess portion concave toward the electrode layer.

2. The multilayer electronic component of claim 1, wherein the end portion of the electrode layer is a region in which the electrode layer is spaced apart from the plating portion, the end portion of the plating portion is a region in which the plating portion is spaced apart from the electrode layer, and the sealing portion covers the end portion of the electrode layer.

3. The multilayer electronic component of claim 2, wherein the sealing portion is disposed to extend from the end portion of the electrode layer to a portion of a surface of the body adjacent to the electrode layer.

4. The multilayer electronic component of claim 1, wherein,
when a direction in which the dielectric layers and the internal electrodes are alternately arranged is a first direction and a direction perpendicular to the first direction is a second direction,
the recess portion to be concave in the second direction from an end of the electrode layer is disposed between the electrode layer and the plating portion, and the sealing portion is disposed to fill the recess portion.

5. The multilayer electronic component of claim 1, wherein,
when a direction in which the dielectric layers and the internal electrodes are alternately arranged is a first direction and a direction perpendicular to the first direction is a second direction,
a minimum size in the second direction from a point at which the electrode layer, the plating portion, and the sealing portion are all in contact to a surface of the sealing portion is 10 nm or more.

6. The multilayer electronic component of claim 1, wherein the sealing portion includes fluorocarbon.

7. The multilayer electronic component of claim 1, wherein the sealing portion includes one or more of CF2-, CF3-, and CF- series fluorocarbons.

8. The multilayer electronic component of claim 1, wherein
the plating portion includes a first plating layer disposed on the electrode layer, a second plating layer disposed on the first plating layer, and a third plating layer disposed on the second plating layer, and
the second plating layer and the third plating layer are not disposed on the sealing portion.

9. The multilayer electronic component of claim 1, wherein the recess portion of the sealing portion is disposed to not extend beyond an end of the electrode layer.

10. The multilayer electronic component of claim 1, wherein
the internal electrode includes electrodes include Ni,
the electrode layer includes Cu and glass,
the plating portion includes a Cu plating layer disposed on the electrode layer, a Ni plating layer disposed on the Cu plating layer, and a Sn plating layer disposed on the Ni plating layer.

11. The multilayer electronic component of claim 1, wherein the sealing portion is disposed to not extend beyond an end of the plating layer disposed at an outermost portion of the plating portion.
